# EUROPEAN PATENT SPECIFICATION

(11) **EP 2 527 628 B1**
(45) Date of publication and mention of the grant of the patent: **19.10.2022**
(21) Application number: 12159754.6
(22) Date of filing: 15.03.2012
(51) Int. Cl.: F02D 41/00, F02D 41/12

(54) **Control device of an internal combustion engine**
Steuervorrichtung für eine Brennkraftmaschine
Dispositif de commande d'un moteur à combustion interne

(30) Priority: 26.05.2011 JP 2011117954
(43) Date of publication of application: 28.11.2012
(73) Proprietor: Mitsubishi Jidosha Kogyo Kabushiki Kaisha, Tokyo 108-8410 (JP)
(72) Inventor: Nishimura, Tohru, Tokyo, 108-8410 (JP)
(74) Representative: Vossius & Partner Patentanwälte Rechtsanwälte mbB

(56) References cited:
- EP-A2- 1 004 760
- EP-A2- 1 674 698
- WO-A1-2007/129160
- DE-A1- 10 154 151

## Description

The present invention relates to a control device of an internal combustion engine, and more specifically, to a technology for preventing compressor surge during deceleration.

Diesel engines have traditionally been equipped with a variable nozzle turbocharger that is provided in its exhaust passage with a nozzle whose opening degree is variable and can be supercharged even in a low-speed zone of a vehicle for the purpose of improving output and fuel consumption and reducing chemical substances, such as carbon monoxide (CO), hydrocarbons (HC), and particulate matters (PM) consisting primarily of graphite, which are contained in exhaust emissions.

Diesel engines equipped with the variable nozzle turbocharger are improved in reacceleration by reducing the nozzle opening degree when the vehicle is decelerated, as seen in Publication 1 (Unexamined Japanese Patent Publication No. 2000-220462).

The control implemented during vehicle deceleration, however, is added with a fuel-injection reducing control that takes a predetermined time to gradually reduce the amount of fuel injection from a fuel-injection nozzle when the vehicle deceleration is detected, for the purpose of lessening an impact attributable to rapid fuel cut. If the nozzle opening degree is decreased during deceleration while the fuel-injection reducing control is carried out, turbine speed is increased to exceed a maximum permissible value of a pressure ratio or become lower than a permissible minimum value of the flow rate of the air through a compressor (compressor flow rate) according to boost pressure. This generates a surge in which intake air intermittently flows backwards from upstream to downstream of the compressor. The surge generation leads to the generation of noise and thus breakage of compressor blades, and is therefore not preferable.

In this view, a technology has been developed, in which when deceleration is detected in a vehicle added with the fuel-injection reducing control to be implemented during deceleration, the opening degree of the nozzle of the variable nozzle turbocharger is increased to become wider than usual, and decreases the opening degree of an EGR device disposed between exhaust and intake passages to prevent a surge, as seen in Publication 2 (Unexamined Japanese Patent Publication No. 2005-240756).

However, for example, if the engine is operated under the condition where the variable nozzle turbocharger is activated with a high boost pressure, the turbine of the variable nozzle turbocharger is rotated through inertia after fuel cut. If the opening degree of the EGR device is decreased as in the technology disclosed in Publication 2, the flow rate of the air from the exhaust passage through the EGR device to the intake passage is reduced, and the flow rate of exhaust gas entering the turbine is increased, whereby the turbine speed is increased. Consequently, the compressor flow rate becomes lower than the permissible minimum value of a current pressure ratio, so that there is the possibility of surge generation.

DE 101 54 151 A1 describes a method of operating an internal combustion engine with a turbocharger comprising an exhaust gas turbine and a compressor, and with an exhaust gas recirculation (EGR) device comprising a return line between the exhaust gas line upstream of the exhaust gas turbine and the intake section downstream of the compressor and an adjustable return valve.

It is an object of the invention to provide a control device of an internal combustion engine, which is capable of preventing surge generation during deceleration.

This object can be achieved by the features specified in the claims. The present invention is defined in the claims. Particularly, in order to achieve the above object, the invention provides a control device of an internal combustion engine,
including a variable geometry turbocharger formed of a turbine having variable vanes that vary exhaust passage area, which is disposed in an exhaust passage of an internal combustion engine installed in a vehicle, and a compressor that is disposed in an intake passage and driven by the turbine; an exhaust-gas recirculation passage that is interposed between the exhaust passage and the intake passage and guides exhaust gas to the intake passage; an exhaust-gas recirculation valve that controls a flow rate of exhaust gas flowing through the exhaust-gas recirculation passage; vehicle-deceleration detecting unit that detects the deceleration of a vehicle; injection-amount detecting unit that detects a fuel injection amount of the internal combustion engine; and control unit that controls an opening degree of variable vanes of the variable geometry turbocharger and the opening degree of the exhaust-gas recirculation valve, characterized in that, when the vehicle deceleration is detected, the control unit sets the opening degree of the variable vanes of the variable geometry turbocharger into a fully open position and further sets the opening degree of the exhaust-gas recirculation valve according to the fuel injection amount.

Since the opening degree of the exhaust-gas recirculation valve is set according to the fuel injection amount during vehicle deceleration, for example, if the internal combustion engine has high exhaust pressure, it is prevented that a large quantity of exhaust gas returns to the intake passage, and thus that a flow rate of a fresh air (intake air flow rate) is reduced to a great degree. If the exhaust pressure is low, the exhaust gas is released to the exhaust-gas recirculation passage so that a portion of the exhaust gas is returned to the intake passage without reducing the flow rate of the fresh air to a great degree. This way, the flow rate of the exhaust gas entering the turbine is decreased. This makes it possible to prevent a reduction in the flow rate of the air through the compressor of the variable geometry turbocharger (compressor flow rate) during vehicle deceleration, and also prevent the compressor flow rate from becoming lower than the permissible minimum value of the compressor. Consequently, surge generation is prevented.

Preferably, the control unit decreases the opening degree of the exhaust-gas recirculation valve when the fuel injection amount is high, and increases the opening degree of the exhaust-gas recirculation valve along with decrease in the fuel injection amount. Furthermore, the control unit preferably sets the opening degree of the exhaust-gas recirculation valve into the fully open position when the fuel injection amount reaches zero.

As described above, the opening degree of the exhaust-gas recirculation valve is decreased when the fuel injection amount is high, and the opening degree of the exhaust-gas recirculation valve is increased in proportion to decrease in the fuel injection amount. Moreover, the exhaust-gas recirculation valve is brought into the fully open position when the fuel injection amount reaches zero. If the exhaust pressure is high because the fuel injection amount is high, the opening degree of the exhaust-gas recirculation valve is decreased. In this manner, it is prevented that a large quantity of exhaust gas returns to the intake passage. If the fuel injection amount is reduced or reaches zero, and the exhaust pressure therefore becomes low, the opening degree of the exhaust-gas recirculation valve is increased or brought into the fully open position. In result, even if supercharging is continued through inertia despite the fact that the variable vanes are fully opened, the intake passage pressure that has been increased can be released through the exhaust-gas recirculation passage. If the exhaust gas is thereafter returned to the intake passage, the flow rate of exhaust gas entering the turbine can be reduced. Consequently, surge generation is prevented by preventing the compressor flow rate from becoming lower than the permissible minimum value of the compressor during deceleration.

Preferably, the control unit sets the opening degree of the exhaust-gas recirculation valve to be small when exhaust pressure is higher than intake pressure, and sets the opening degree of the exhaust-gas recirculation valve to be large when the exhaust pressure is lower than the intake pressure.

Since the opening degree of the exhaust-gas recirculation valve is set in consideration of magnitude relation between the exhaust and intake pressures, the flow rate of the exhaust gas returning to the intake passage can be controlled with accuracy, thereby preventing surge generation.

In this specification, the "fully open position" includes a substantially fully open position. In other words, the "fully open position" refers to when the vanes are open at the maximum opening degree that the control unit can control.

The present invention will become more fully understood from the detailed description given hereinafter and the accompanying drawings which are given by way of illustration only, and thus, are not limitative of the present invention, and wherein:
FIG. 1 is a schematic configuration view of an engine equipped with a control device of an internal combustion engine according to the invention;
FIG. 2 is a flowchart showing EGR valve control that is implemented by an ECU; and
FIG. 3 is a characteristic diagram of a variable nozzle turbocharger.

An embodiment of the invention will be described below with reference to the attached drawings.

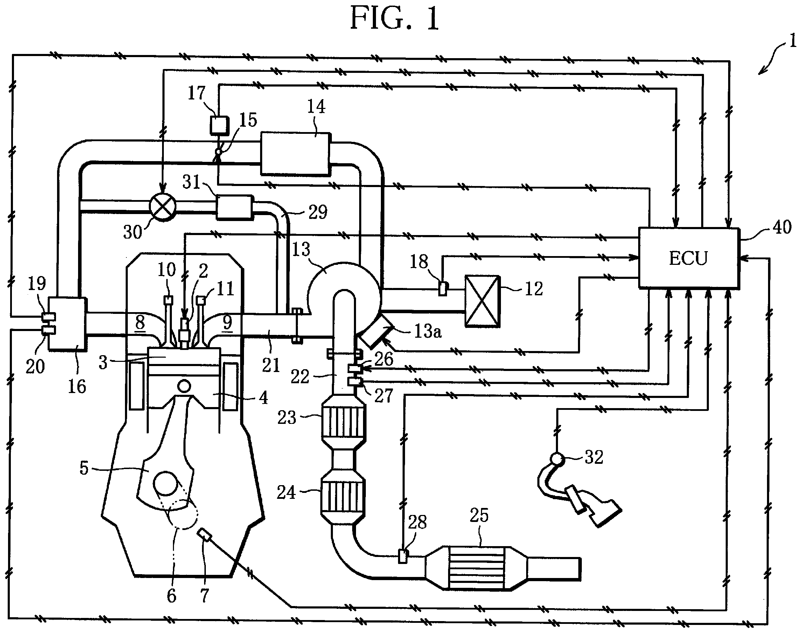

FIG. 1 is a schematic configuration view of an engine equipped with a control device of an internal combustion engine.

As shown in FIG. 1, an engine (internal combustion engine) 1 is a multicylindered internal combustion engine of a direct in-cylinder injection type (common-rail diesel engine, for example). To be specific, the engine 1 is designed to supply high-pressure fuel accumulated in a common rail to a fuel injection nozzle 2 of each cylinder, and inject the fuel from the fuel injection nozzle 2 into a combustion chamber 3 of each cylinder with arbitrary injection timing and amount.

Each cylinder of the engine 1 is provided with a piston 4 that is slidable in a vertical direction. The piston 4 is connected to a crankshaft 6 with a con rod 5. The crankshaft 6 is provided in one end portion thereof with a crank angle sensor 7 that detects rotational speed and a flywheel, not shown.

The combustion chamber 3 is connected with an intake port 8 and an exhaust port 9.

The intake port 8 is provided with an intake valve 10 that carries out connection and disconnection between the combustion chamber 3 and the intake port 8. The exhaust port 9 is provided with an exhaust valve 11 that connects and disconnects the combustion chamber 3 and the exhaust port 9.

In the upstream side of the intake port 8, there are provided an air cleaner 12 that removes dust in fresh air sucked at a most upstream position; a compressor housing, not shown, of a variable nozzle turbocharger (variable geometry turbocharger) 13 that compresses the sucked fresh air by using exhaust energy; an inter cooler 14 that refrigerates the fresh air that is compressed and has high temperature; an electronic control throttle valve 15 that adjusts a fresh air flow rate; and an intake manifold (intake passage) 16 that distributes the sucked air to the cylinders, so as to be connected to each other. The electronic control throttle valve 15 has a throttle position sensor 17 that detects an opening degree of a throttle valve.

In the downstream of the air cleaner 12 and the upstream of the compressor housing of the variable nozzle turbocharger 13, an air flow sensor 18 that detects the amount of fresh air sucked into the combustion chamber 3 is disposed to protrude into the passage. A boost sensor 19 that detects the pressure of the intake air sucked into the combustion chamber 3 and an intake temperature sensor 20 that detects the temperature of the intake air are provided to protrude into the intake manifold 16.

In the downstream of the exhaust port 9, there are provided an exhaust manifold (exhaust passage) 21 that pulls together the exhaust gas discharged from the cylinders; a turbine housing, not shown, that guides the exhaust gas into the variable nozzle turbocharger 13; and an exhaust pipe (exhaust passage) 22, so as to be connected to each other.

Inside the turbine housing of the variable nozzle turbocharger 13, there are disposed variable vanes, not shown, that vary the passage area of the exhaust passage. The variable nozzle turbocharger 13 has an actuator 13a that mechanically activates the variable vanes.

In the exhaust pipe 22, an oxidation catalyst 23 that oxidizes components to be oxidized in the exhaust gas, a NOx storage reduction catalyst 24 that stores and reduces NOx in exhaust gas, and a diesel particulate filter 25 that collects and burns particulate matters consisting primarily of graphite in exhaust gas are provided in the order named from upstream so as to be connected to each other.

In the downstream of the variable nozzle turbocharger 13 of the exhaust pipe 22 and in the upstream of the oxidation catalyst 23, a fuel addition nozzle 26 that adds a reducing agent into exhaust gas and an exhaust temperature sensor 27 that detects the temperature of the exhaust gas are disposed to protrude into the exhaust pipe 22.

An A/F sensor 28 that detects oxygen concentration that is oxygen proportion in exhaust gas is disposed in the downstream of the NOx storage reduction catalyst 24 of the exhaust pipe 22 and the upstream of the diesel particulate filter 25 so as to protrude into the passage.

The intake manifold 16 and the exhaust manifold 21 are provided with an EGR passage (exhaust-gas recirculation passage) 29 that returns a portion of exhaust gas into intake air, so as to be connected to each other. Further disposed in the EGR passage 29 are an EGR valve (exhaust-gas recirculation valve) 30 that adjusts the amount of the exhaust gas returned into intake air, namely, EGR amount, and an EGR cooler 31 that refrigerates the exhaust gas to be returned into intake air.

Various kinds of devices and sensors including the fuel injection nozzle 2, the crank angle sensor 7, the actuator 13a, the throttle position sensor 17, the air flow sensor 18, the boost sensor 19, the intake temperature sensor 20, the fuel addition nozzle 26, the exhaust temperature sensor 27, the A/F sensor 28, the EGR valve 30, and an accelerator position sensor (vehicle-deceleration detecting unit) 32 that detects a pressing amount of an accelerator pedal that is pressed by the driver of a vehicle equipped with the engine 1 are electrically connected to an electrical control unit (ECU) (injection-amount detecting unit, vehicle-deceleration detecting unit, control unit) 40 that is a control device for implementing comprehensive control on the engine 1 and includes an input/output device, a memory device (such as a ROM, a RAM, and a nonvolatile RAM), a timer, a central processing unit (CPU), and the like. The ECU 40 activates and controls the various kinds of devices according to information transmitted from the various kinds of sensors.

Sensors including the crank angle sensor 7, the throttle position sensor 17, the air flow sensor 18, the boost sensor 19, the intake temperature sensor 20, the exhaust temperature sensor 27, the A/F sensor 28, the accelerator position sensor 32 and the like are electrically connected to the input side of the ECU 40. Detected information of these various kinds of devices and sensors is inputted to the ECU 40.

The fuel injection nozzle 2, the actuator 13a, the EGR valve 30 and the fuel addition nozzle 26 are electrically connected to the output side of the ECU 40.

According to detected values of the sensors, the ECU 40 controls the amount and timing of fuel injection from the fuel injection nozzle 2, the opening degree of the variable vanes of the variable nozzle turbocharger 13, an addition amount of the reducing agent added by the fuel addition nozzle 26, and the opening degree of the EGR valve 30, to be most suitable.

The EGR valve control by the ECU 40 will be described below.

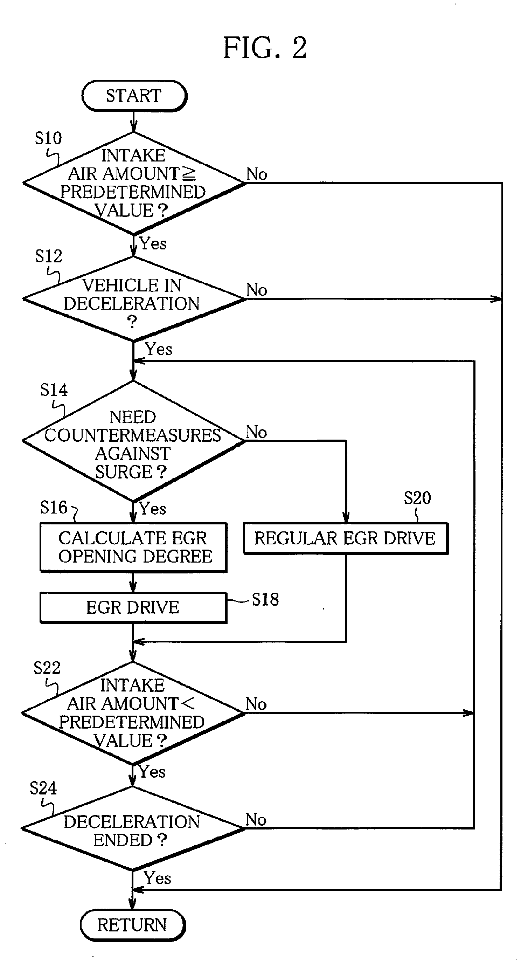

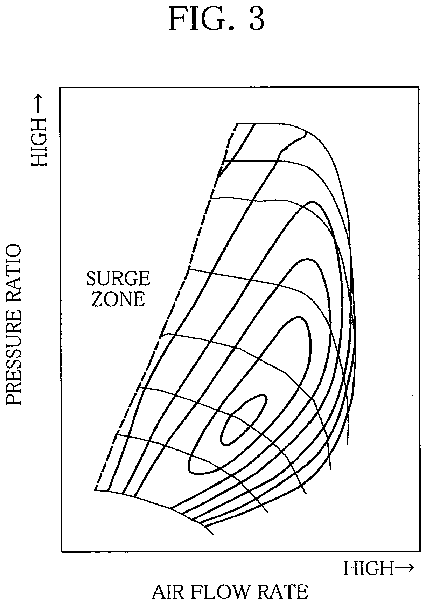

FIG. 2 is a flowchart showing the EGR valve control that is implemented by the ECU 40. FIG. 3 is a characteristic diagram of the variable nozzle turbocharger 13. A vertical axis denotes a pressure ratio between inlet pressure and outlet pressure of the compressor, and a horizontal axis denotes the amount of the air flow through the compressor (compressor flow rate). A broken line, a thick line and a thin line in the diagram represent a permissible minimum value of the compressor flow rate, compressor efficiency, and compressor speed, respectively. A zone located on the left side of the broken line in the diagram is a surge zone in which a surge is generated.

As shown in FIG. 2, in Step S10, it is determined whether the intake air amount detected by the air flow sensor 18 is equal to or higher than a predetermined value. More specifically, Step S10 calculates current load on the basis of the intake air amount and makes a determination as to whether the current load is equal to or higher than predetermined load. If the determination result is YES, which means that the intake air amount is equal to or higher than the predetermined value, and that the current load is equal to or higher than the predetermined load, it is determined that the compressor is likely to enter the surge zone during deceleration. The routine advances to Step S12. If the determination result is NO, which means that the intake air amount is lower than the predetermined value, and that the current load is lower than the predetermined load, it is determined that the compressor is unlikely to enter the surge zone during deceleration. The routine then returns.

Step S12 makes a determination as to whether the vehicle is being decelerated. To be more specific, it is determined whether the pressing amount of the accelerator pedal, which is detected by the accelerator position sensor 32, is reduced, and whether indicated torque that is determined by the pressing amount of the accelerator pedal and the like is decreased. If the determination result is YES, which means that the pressing amount of the accelerator pedal is reduced, and that the indicated torque is decreased, it is determined that the vehicle is being decelerated. The actuator 13a is controlled to fully open the variable vanes of the variable nozzle turbocharger 13, and the routine moves to Step S14. If the determination result is NO, which means that the pressing amount of the accelerator pedal is not reduced or that the indicated torque is not decreased, it is not determined that the vehicle is being decelerated. The routine then returns.

Step S14 makes a determination as to whether countermeasures against surge are necessary. That is to say, on the basis of the intake air amount detected by the air flow sensor 18, the intake air pressure detected by the boost sensor 19, and the intake temperature detected by the intake temperature sensor 27, a determination is made as to whether the flow rate of the air through the compressor falls in the surge zone shown in FIG. 3. If the determination result is YES, and the flow rate of the air through the compressor falls in the surge zone, the routine proceeds to Step S16. If the determination result is NO, and the flow rate of the air through the compressor is not in the surge zone, the routine proceeds to Step S20.

Step S16 calculates the EGR opening degree on the basis of the fuel injection amount from the fuel injection nozzle 2. If the fuel injection amount is large, the EGR opening degree is made small. The lower the fuel injection amount becomes, the larger the EGR opening degree is made. If the fuel injection amount is zero, that is, during fuel cut, the EGR opening degree is brought into a fully open position. The routine advances to Step S18.

Step S18 controls the EGR valve 30 to achieve the EGR opening degree calculated in Step S16. The routine then moves to Step S22.

Step S20 implements regular EGR drive control. The opening degree of the EGR valve 30 is controlled according to air/fuel ratio. The routine advances to Step S22.

In Step S22, it is determined whether the intake air amount detected by the air flow sensor 18 is lower than the predetermined value. More specifically, Step S22 calculates current load on the basis of the intake air amount and makes a determination as to whether the current load is lower than the predetermined load. If the determination result is YES, which means that the intake air amount is lower than the predetermined value, and that the current load is lower than the predetermined load, the routine proceeds to Step S24. If the determination result is NO, and the intake air amount is equal to or higher than the predetermined value, the routine returns to Step S14 again.

Step S24 makes a determination as to whether deceleration is ended. Specifically, it is determined whether the pressing amount of the accelerator pedal, which is detected by the accelerator position sensor 32, is increased, and whether the indicated torque that is determined by the pressing amount of the accelerator pedal and the like is increased. If the determination result is YES, which means that the pressing amount of the accelerator pedal is increased, and that the indicated torque is increased, it is determined that deceleration is ended. The routine then returns. If the determination result is NO, which means that the pressing amount of the accelerator pedal is reduced, and that the indicated torque is decreased, it is determined that the vehicle is being decelerated. The routine returns to Step S14 again.

In the control device of an internal combustion engine of the present invention, if it is determined that the load is equal to or higher than the predetermined load, and that the vehicle is being decelerated, the variable vanes of the variable nozzle turbocharger 13 are brought into the fully open position. Furthermore, if it is determined that there is need for countermeasures against surge, according to the fuel injection amount from the fuel injection nozzle 2, the opening degree of the EGR valve 30 is made small if the fuel injection amount is large. The opening degree of the EGR valve 30 is made large in proportion to the decrease of the fuel injection amount. When the fuel injection amount is zero, that is, during fuel cut, the opening degree of the EGR valve 30 is fully opened.

On this account, if the fuel injection amount is large, and the exhaust pressure is higher than the intake pressure, the opening degree of the EGR valve 30 is made small. This way, the exhaust gas is prevented from returning to the intake manifold 16. If the fuel injection amount is low or reaches zero, and the exhaust pressure is lower than the intake pressure, the opening degree of the EGR valve 30 is made large or fully opened so that intake air is discharged into the exhaust manifold 21. The compressor flow rate is therefore prevented from becoming lower than the permissible minimum value during deceleration, thereby preventing surge generation.

The embodiment of the invention is presented above, but is not limited to the above-mentioned.

The above embodiment includes the NOx storage reduction catalyst 24, the fuel addition nozzle 26, and the A/F sensor 28. Instead, however, the invention may be also applied to an engine with an exhaust system without these devices.

## Claims

1. A control device of an internal combustion engine, comprising:
a variable geometry turbocharger (13) formed of a turbine having variable vanes that vary exhaust passage area, which is disposed in an exhaust passage (21, 22) of an internal combustion engine (1) installed in a vehicle, and a compressor that is disposed in an intake passage (16) and driven by the turbine;
an exhaust-gas recirculation passage (29) that is interposed between the exhaust passage and the intake passage and guides exhaust gas to the intake passage;
an exhaust-gas recirculation valve (30) that controls a flow rate of exhaust gas flowing through the exhaust-gas recirculation passage;
a vehicle-deceleration detecting unit (32, 40) that detects the deceleration of a vehicle;
an injection-amount detecting unit (40) that detects a fuel injection amount of the internal combustion engine; and
a control unit (40) that controls an opening degree of variable vanes of the variable geometry turbocharger and the opening degree of the exhaust-gas recirculation valve, and,
when the vehicle deceleration is detected, the control unit (40) sets the opening degree of the variable vanes of the variable geometry turbocharger into a fully open position and further sets the opening degree of the exhaust-gas recirculation valve according to the fuel injection amount; **characterized in that** the control unit (40) decreases the opening degree of the exhaust-gas recirculation valve (30) when the fuel injection amount is high, and increases the opening degree of the exhaust-gas recirculation valve (30) along with decrease in the fuel injection amount, and further sets the opening degree of the exhaust-gas recirculation valve (30) into the fully open position when the fuel injection amount reaches zero.

2. The control device of an internal combustion engine according to claim 1, **characterized in that**:
the control unit (40) sets the opening degree of the exhaust-gas recirculation valve (30) to be small when exhaust pressure is higher than intake pressure, and sets the opening degree of the exhaust-gas recirculation valve to be large when the exhaust pressure is lower than the intake pressure.

## Patentansprüche

1. Steuervorrichtung für einen Verbrennungsmotor, mit:
einem Turbolader (13) mit variabler Geometrie, der aus einer in einem Abgaskanal (21, 22) eines in einem Fahrzeug installierten Verbrennungsmotors (1) angeordneten Turbine mit variablen Schaufeln, die den Abgaskanalbereich verändern, und einem Kompressor gebildet wird, der in einem Ansaugkanal (16) angeordnet ist und durch die Turbine angetrieben wird;
einem Abgasrückführkanal (29), der zwischen dem Abgaskanal und dem Ansaugkanal angeordnet ist und Abgas zum Ansaugkanal leitet;
einem Abgasrückführventil (30), das eine Durchflussrate von durch den Abgasrückführkanal strömendem Abgas steuert;
einer Fahrzeugverzögerungserfassungseinheit (32, 40), die eine Verzögerung eines Fahrzeugs erfasst;
einer Einspritzmengenerfassungseinheit (40), die eine Kraftstoffeinspritzmenge des Verbrennungsmotors erfasst; und
einer Steuereinheit (40), die einen Öffnungsgrad von variablen Schaufeln des Turboladers mit variabler Geometrie und den Öffnungsgrad des Abgasrückführventils steuert, wobei die Steuereinheit, wenn die Fahrzeugverzögerung erfasst wird, den Öffnungsgrad der variablen Schaufeln des Turboladers mit variabler Geometrie auf eine vollständig offene Position einstellt und ferner den Öffnungsgrad des Abgasrückführventils gemäß der Kraftstoffeinspritzmenge einstellt;
**dadurch gekennzeichnet, dass**
die Steuereinheit (40) den Öffnungsgrad des Abgasrückführventils (30) vermindert, wenn die Kraftstoffeinspritzmenge hoch ist, und den Öffnungsgrad des Abgasrückführventils (30) zusammen mit einer Abnahme der Kraftstoffeinspritzmenge erhöht, und ferner den Öffnungsgrad des Abgasrückführventils (30) auf die vollständig geöffnete Position einstellt, wenn die Kraftstoffeinspritzmenge Null erreicht.

2. Steuervorrichtung nach Anspruch 1, **dadurch gekennzeichnet, dass**
die Steuereinheit (40) den Öffnungsgrad des Abgasrückführventils (30) auf einen kleinen Wert einstellt, wenn der Abgasdruck höher ist als ein Ansaugdruck, und den Öffnungsgrad des Abgasrückführventils auf einen großen Wert einstellt, wenn der Abgasdruck niedriger ist als der Ansaugdruck.

## Revendications

1. Dispositif de commande d'un moteur à combustion interne, comprenant :
un turbocompresseur à géométrie variable (13) formé d'une turbine ayant des aubes variables qui font varier l'aire d'un passage d'échappement, qui est disposé dans un passage d'échappement (21, 22) d'un moteur à combustion interne (1) installé dans un véhicule, et un compresseur qui est disposé dans un passage d'admission (16) et entraîné par la turbine ;
un passage de recirculation de gaz d'échappement (29) qui est interposé entre le passage d'échappement et le passage d'admission et guide un gaz d'échappement vers le passage d'admission ;
une vanne de recirculation de gaz d'échappement (30) qui commande un débit de gaz d'échappement traversant le passage de recirculation de gaz d'échappement ;
une unité de détection de décélération de véhicule (32, 40) qui détecte la décélération d'un véhicule ;
une unité de détection de quantité d'injection (40) qui détecte une quantité d'injection de carburant du moteur à combustion interne ; et
une unité de commande (40) qui commande un degré d'ouverture d'aubes variables du turbocompresseur à géométrie variable et le degré d'ouverture de la vanne de recirculation de gaz d'échappement, et,
lorsque la décélération du véhicule est détectée, l'unité de commande (40) établit le degré d'ouverture des aubes variables du turbocompresseur à géométrie variable sur une position entièrement ouverte et établit en outre le degré d'ouverture de la vanne de recirculation de gaz d'échappement selon la quantité d'injection de carburant ;
**caractérisé en ce que** l'unité de commande (40) diminue le degré d'ouverture de la vanne de recirculation de gaz d'échappement (30) lorsque la quantité d'injection de carburant est élevée, et augmente le degré d'ouverture de la vanne de recirculation de gaz d'échappement (30) conjointement avec une diminution de la quantité d'injection de carburant, et établit en outre le degré d'ouverture de la vanne de recirculation de gaz d'échappement (30) sur la position entièrement ouverte lorsque la quantité d'injection de carburant atteint zéro.

2. Dispositif de commande d'un moteur à combustion interne selon la revendication 1, **caractérisé en ce que** :
l'unité de commande (40) établit le degré d'ouverture de la vanne de recirculation de gaz d'échappement (30) afin qu'il soit petit lorsqu'une pression d'échappement est supérieure à une pression d'admission, et établit le degré d'ouverture de la vanne de recirculation de gaz d'échappement afin qu'il soit grand lorsque la pression d'échappement est inférieure à la pression d'admission.
